# EUROPÄISCHE PATENTSCHRIFT

(11) **EP 1 584 825 B1**
(45) Veröffentlichungstag und Bekanntmachung des Hinweises auf die Patenterteilung: **05.07.2017**
(21) Anmeldenummer: 05007375.8
(22) Anmeldetag: 05.04.2005
(51) Int. Cl.: F16B 12/14

(54) **Befestigungselement für Möbelbeschläge**
Fastening element for furniture fittings
Elément de fixation pour des garnitures de meubles

(30) Priorität: 07.04.2004 DE 202004005460 U
(43) Veröffentlichungstag der Anmeldung: 12.10.2005
(73) Patentinhaber: ALFIT AKTIENGESELLSCHAFT, 6840 Götzis (AT)
(72) Erfinder: Grabher, Günter, A-6972 Fussach (AT)
(74) Vertreter: Patentanwälte Magenbauer & Kollegen Partnerschaft mbB

(56) Entgegenhaltungen:
- FR-A- 2 580 350
- US-A- 3 477 337
- US-A- 4 827 756
- US-B1- 6 601 885

## Beschreibung

Die Erfindung betrifft ein Befestigungselement, insbesondere eine Befestigungsschraube für die Befestigung von Möbelbeschlägen auf der Oberfläche von Möbelwandungen mit einem durch eine Bohrung im Möbelbeschlag hindurch in eine Befestigungsbohrung in der Möbelwandung einführbaren Gewindeschaft, an dessen äußerem freien Ende ein Schraubenkopf vorgesehen ist, wobei im Übergangsbereich des Schafts zum Schraubenkopf ein Halterungsabschnitt vorgesehen ist, dessen Durchmesser kleiner als der Außendurchmesser des Schraubenkopfs und zumindest abschnittsweise größer als der Durchmesser des Schafts ist, wobei die in Richtung der Längsmittelachse des Schafts gemessene Länge des Halterungsabschnitts so gewählt ist, dass dieser sich in der bestimmungsgemäßen Befestigungsstellung des Möbelbeschlags auf der zugeordneten Möbelwand durch deren Oberfläche hindurch ins Material der Möbelwand erstreckt, und dass der Halterungsabschnitt mit wenigstens einem eine im Wesentlichen radial verlaufende Schneidkante aufweisenden, bei der Drehung der Schraube in Einschraubrichtung spanend ins Material der Möbelwandung eindringenden Schneidzahn bzw. Schneidzähnen versehen ist, und wobei der Halterungsabschnitt eine im Wesentlichen zylindrische Außenflache aufweist.

Für die Befestigung von Möbelbeschlägen auf der Oberfläche von Möbelwänden werden heute in der Regel Befestigungsschrauben verwendet, deren Gewindeschaft durch eine Befestigungsbohrung im Beschlag hindurch direkt in eine Vorbohrung mit im Vergleich zum Außendurchmesser des Gewindeschafts geringeren Durchmessers in der Möbelwand oder - in Sonderfällen - auch in einer zuvor in einer entsprechend größeren Bohrung in der Möbelwand eingebrachten Einschlag- oder Spreizhülse aus Kunststoff eingeschraubt werden. Beim direkten Einschrauben des Gewindeschafts in die Möbelwandung werden überwiegend so genannte Euro-Schrauben verwendet, welche aufgrund einer im Vergleich zu üblichen Holzschrauben verringerten Steigung der Gewindegänge und vergrößerten Gangtiefe eine höhere Beanspruchbarkeit in Bezug auf Beanspruchung aufweisen, welche sie in der Vorbohrung zu lockern oder insgesamt aus der Vorbohrung herauszuziehen suchen. Alternativ werden neben den genannten Euro-Schrauben - in geringerem Maße - auch als Spax-Schrauben bezeichnete Spanplattenschrauben verwendet, welche aufgrund eines vergleichsweise geringeren Schaftdurchmessers und scharfkantiger Gewindegänge ohne Vorbohrung in das Spanplattenmaterial einschraubbar sind. Problematisch werden solche Schraubbefestigungen dann, wenn über die Befestigungsschraube stoßartige Beanspruchungen des Beschlags auf die Möbelwand übertragen werden, wie dies beispielsweise bei der Befestigung von Führungsschienen von Schubladen-Ausziehführungen auf der Innenseite einer Schrank-Seitenwand der Fall ist. Beim schwungvollen Schließen der Schublade entstehen durch den plötzlichen Aufprall der Schubladenblende am Schrankkorpus zum Abschluss des Schließvorgangs Stoßbeanspruchungen, welche über die Befestigungsschraube in die Schrank-Seitenwand abgetragen werden müssen. Ähnliche Stöße entstehen auch beim schnellen Schließen von Schranktüren beim Anprall des Türflügels am Schrankkorpus, die über die Befestigungsschrauben der Montageplatte der die Türflügel am Schrankkorpus anlenkenden Scharniere auf den Schrankkorpus übertragen werden. Insbesondere dann, wenn Möbelbeschläge auf oder in den im heutigen Möbelbau für Schrankwände zunehmend verwendeten Spanplattenmaterial befestigt werden müssen, können solche Stöße zu einem allmählichen Aufweiten der Befestigungsbohrung und einem Losewerden des Schraubeingriffs des Gewindeschafts in der Befestigungsbohrung führen. Die Beschläge werden dann ihrerseits lose und können bei jeder weiteren Stoßbeanspruchung die Befestigungsbohrung zunehmend aufweiten, wobei vor allem der Mündungsbereich der Befestigungsbohrung in der Schrankwand zunehmend konisch aufgeweitet wird. Bei den modernen Spanplatten ist dieser Mündungsbereich zwar im Vergleich zum inneren Plattenkern stärker verdichtet und damit auch höher beanspruchbar, jedoch kann nicht ausgeschlossen werden, dass die Schraubbefestigung sich allmählich so weit ausarbeitet und löst, dass der Mündungsbereich größer als der Außendurchmesser des Gewindeschafts wird und dann die Gefahr des Ausreißens des Gewindeschafts aus dem weniger verdichteten und somit weniger beanspruchbaren inneren Bereich der Befestigungsbohrung der Spanplatten erfolgt.

Bei mit dünnen, spröd-harten Oberflächenbelägen beschichteten Möbelplatten kann die Befestigung von Möbelbeschlägen mit den normalen Befestigungsschrauben auch optische Probleme im Mündungsbereich der Befestigungsbohrung zur Folge haben. Solche spröd-harten Oberflächenbeläge, wie sie als Kratzschutz und zur optischen Verschönerung der Oberfläche von Möbelwänden aus Spanplatten eingesetzt werden, haben zwar eine hohe Widerstandsfähigkeit gegen schneidende oder kratzende Oberflächenbeanspruchungen, neigen jedoch beim spanenden Bearbeiten, z.B. beim Einbohren von Befestigungsbohrungen, zum Splittern und Ausbrechen, so dass der Mündungsbereich der so erzeugten Befestigungsbohrungen einen unbefriedigenden ausgesplitterten Anblick bietet. Solange ein aufgeschraubter Befestigungsbeschlag die Bohrung verdeckt, ist dies hinnehmbar. In vielen Fällen werden jedoch auch Möbelbeschläge nach der ersten Montage wieder entfernt, um beispielsweise an anderer Stelle montiert zu werden oder ein beschädigter Möbelbeschlag muss ersetzt werden. Dann werden die ausgesplitterten Ränder der Befestigungsbohrungen sichtbar, was unerwünscht ist.

Aus der US 4 827 756 A ist ein Befestigungselement nach Art einer mit einem Schraubenkopf versehenen Befestigungsschraube bekannt, welches zur Befestigung eines relativ dickwandigen, z.B. aus Kunststoff bestehenden Bauteils, auf einer aus dünnwandigem Metallblech bestehenden Trägerstruktur bestimmt ist. Dieses Befestigungselement weist im Übergangsbereich vom Schraubenkopf zum Gewindeschaft einen Übergangsabschnitt auf, dessen Durchmesser kleiner als der Außendurchmesser des Schraubenkopfs, jedoch größer als der Durchmesser des in der Blech-Trägerstruktur zu befestigenden Gewindeschafts ist. Der in seinem zylindrischen Umfangsbereich mit einer Rändelung in Form von axial verlaufenden Riefen versehene Übergangsabschnitt dient im Wesentlichen zur zentrierten Ausrichtung des Befestigungsschafts in der Befestigungsbohrung im dickwandigen Bauteil. Seine Lange ist deshalb im Wesentlichen gleich der Dicke des zu befestigenden Bauteils bemessen, so dass er in der Befestigungsendstellung stirnseitig mit den bei der Rändelung entstandenen zugespitzten Vorsprüngen in die zugewandten Oberfläche des Blech-Trägerbauteils eingedrückt ist.

Der Erfindung liegt demgegenüber die Aufgabe zugrunde, ein Befestigungselement nach Art einer Befestigungsschraube zu schaffen, welches die vorerwähnten Nachteile vermeidet, d.h. nach der Befestigung eines im Vergleich zu normalen Befestigungsschrauben höher beanspruchbaren Sitz in der Befestigungsbohrung gewährleistet und/oder darüber hinaus auch eine optisch unbefriedigende Beschädigung der Ränder von Befestigungsbohrungen in Möbelwänden vermeidet.

Ausgehend von einem Befestigungselement der eingangs erwähnten Art wird diese Aufgabe erfindungsgemäß dadurch gelöst, dass an der Stirnfläche des Halterungsabschnitts zwei oder mehr in gleichmäßigen Winkelabständen in Umfangsrichtung versetzte Schneidzähne vorgesehen sind.

Da der Halterungsabschnitt einen im Vergleich zum Außendurchmesser des Schraubenschafts vergrößerten Außendurchmesser hat, besteht zwischen diesem Halterungsabschnitt und dem entsprechend zugeordneten Mündungsbereich der Bohrung auch ein vergrößerter Flächeneingriff im Vergleich zum übrigen Schaftbereich, wodurch in die Schraube eingeleitete Beanspruchungen im Halterungsabschnitt über eine vergleichsweise größere flächige Anlage in der Befestigungsbohrung abgetragen werden. Die spezifischen Flächenbeanspruchungen werden also verringert. Dadurch wird eine erhöhte Beanspruchbarkeit solcher Schraubbefestigungen von Möbelbeschlägen insbesondere im kritischen Mündungsbereich erhalten und eine konische Aufweitung der Befestigungsbohrung weitgehend vermieden. Durch die Anordnung des wenigstens einen Schneidzahns mit der im Wesentlichen radial verlaufende Schneidkante am Halterungsabschnitt kann die Verwendung eines Stufenbohrers zur Erzeugung der Vorbohrung entfallen, weil der Halterungsabschnitt sich beim Anziehen der Befestigungsschraube dann den im Durchmesser vergrößerten mündungsseitigen Bohrungsbereich selbst schneidet.

An der Stirnfläche des Halterungsabschnitts sind zwei oder mehr in gleichmäßigen Winkelabständen in Umfangsrichtung versetzte Schneidzähne vorgesehen, welche dann nach Art eines Stirnfräsers den Mündungsbereich der Befestigungsbohrung erweitern.

Um eine saubere auch optisch befriedigende Begrenzungskante der Mündung der Befestigungsbohrung zu erhalten, kann der Halterungsabschnitts im Bereich seiner vorderen Stirnfläche wenigstens einen radial außen bündig in die zylindrische Oberfläche übergehenden, in Einschraubrichtung vortretenden messerartigen Schneidzahn aufweisen. Für einen gleichmäßigen Schneideinsatz empfiehlt sich auch hier, wenigstens zwei vorzugsweise drei oder mehr in Umfangsrichtung in gleichmäßigen Winkelabständen versetzt angeordnete messerartige Schneidzahne vorzusehen.

Die Erfindung ist in der folgenden Beschreibung eines Ausführungsbeispiels in Verbindung mit der Zeichnung näher erläutert, und zwar zeigt:
- Fig. 1: eine Schnittansicht durch den Befestigungsbereich mittels eines nicht zur Erfindung gehörenden ersten Ausführungsbeispiels eines Befestigungselements auf der Oberfläche einer Möbelwand befestigten Möbelbeschlags;
- Fig. 2: eine in der Schnittführung der Fig. 1 entsprechende Schnittansicht durch die Möbelwand ohne Möbelbeschlag und Befestigungselement, so dass die Form der für das Befestigungselement gemäß Fig. 1 erforderliche Vorbohrung in der Möbelwand erkennbar ist;
- Fig. 3: eine in der Schnittführung der Fig. 1 entsprechende Schnittansicht durch eine mit einem nicht zur Erfindung gehörenden zweiten Ausführungsbeispiel eines Befestigungselements auf einer Möbelwand befestigten Möbelbeschlags;
- Fig. 4: eine der Fig. 3 entsprechende Schnittansicht durch die dort vorgesehene Möbelwand vor dem Befestigen des Möbelbeschlagteils mittels des dort verwendeten Befestigungselements;
- Fig. 5: eine den Fig. 1 und 3 entsprechende Schnittansicht, in welcher die Befestigung des Möbelbeschlags durch ein erfindungsgemäßes drittes Ausführungsbeispiel eines Befestigungselements auf der Möbelwand veranschaulicht ist;
- Fig. 6: eine der Fig. 5 entsprechende Schnittansicht durch die Möbelwand vor der Befestigung des Möbelbeschlags mit dem in Fig. 5 verwendeten erfindungsgemäßen Befestigungselement; und
- Fig. 7: eine der Fig. 5 entsprechende Schnittansicht, bei welcher der Möbelbeschlag unter Verwendung eines gegenüber dem dritten Ausführungsbeispiel abgewandten nicht zur Erfindung gehörenden vierten Ausführungsbeispiels eines Befestigungselements auf der Möbelwand gehalten ist.

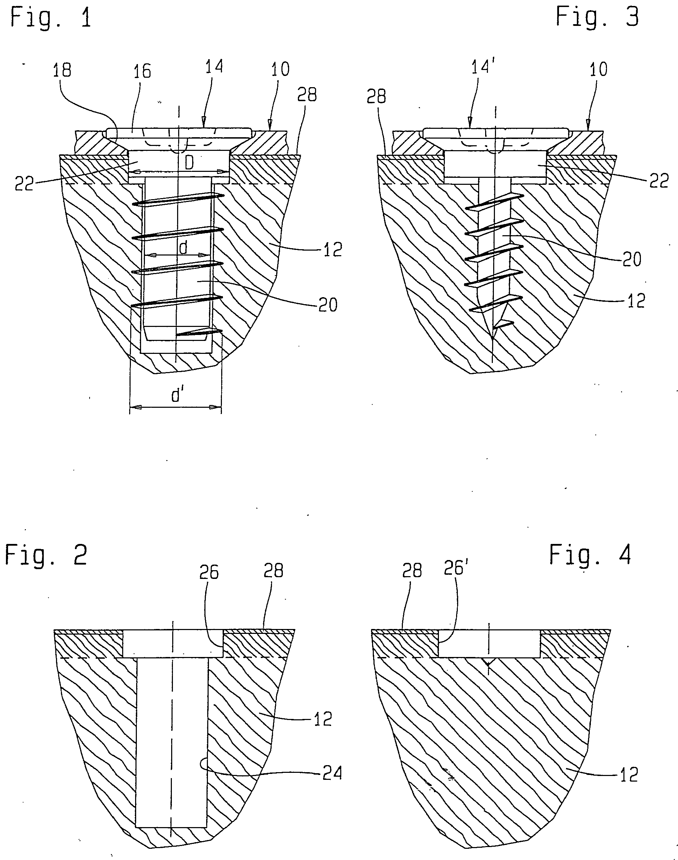

In Figur 1 ist schematisch die Befestigung eines Möbelbeschlags 10 auf der Oberfläche einer Möbelwand 12 mit einem in seiner Gesamtheit mit 14 bezeichneten ersten Ausführungsbeispiel eines erfindungsgemäßen Befestigungselements im Schnitt gezeigt. Das grundsätzlich den im Möbelbau heute in großem Umfang eingesetzten Euro-Schrauben entsprechenden Befestigungselement 14 weist einen im dargestellten Fall kegelstumpfförmigen Schraubenkopf 16 auf, welcher in der in der Zeichnung dargestellten Befestigungsstellung also in einer in ihrem Einführbereich komplementär kegelstumpfförmig angesenkten Durchgangsöffnung 18 im Möbelbeschlag versenkt angeordnet ist. Am Schraubenkopf 16 ist ein mit dem für Euro-Schrauben typischen Gewinde versehener Schraubenschaft 20 über einen integral an der Unterseite des Schraubenkopfs 16 angeformten Halterungsabschnitt 22 angesetzt. Der Halterungsabschnitt 20 hat im speziellen Fall die Form eines kurzen Zylinders, dessen Durchmesser D im Wesentlichen gleich dem Durchmesser des unteren verjüngten Basisabschnitts des Schraubenkopfs 16 ist. Von der gegenüberliegenden Stirnfläche des Halterungsabschnitts 22 tritt mittig der integral angeformte Schraubenschaft 20 vor, dessen Kerndurchmesser d deutlich geringer als der Durchmesser D des Halterungsabschnitts 20 ist. Der über die Spitzen der Gewindegänge des Schraubenschafts 20 gemessene Durchmesser d' entspricht etwa dem bzw. ist nur geringfügig kleiner als der Durchmesser D des Halterungsabschnitts 22.

Die in Richtung der Längsmittelachse des Schraubenschafts 20 gemessene Erstreckung des Halterungsabschnitts 22 ist so gewählt, dass der Halterungsabschnitt sich in der in Fig. 1 erkennbaren Weise in der bestimmungsgemäßen Befestigungsstellung des Möbelbeschlags 14 auf der Möbelwandung 12 durch deren Oberfläche hindurch ins Material der Möbelwandung erstreckt, und dann in einen im Mündungsbereich der - in Fig. 2 gesondert dargestellten -Befestigungsbohrung 24 erweiterten Bohrungsabschnitt 26 in der Möbelwandung 12 eingreift. Der Durchmesser des erweiterten Abschnitts 26 ist dabei gleich dem Durchmesser D des Halterungsabschnitts 22, so dass der Halterungsabschnitt 22 in der bestimmungsgemäßen Befestigungsstellung also komplementär im Bohrungsabschnitt 26 gehalten und großflächig abgestützt ist. Parallel zur Oberflache der - im dargestellten Fall noch mit einem aufgeleimten dünnen spröd-harten Oberflächenbelag 28 versehenen Möbelwand 12 auf den Möbelbeschlag 10 einwirkenden Beanspruchungen werden also über den Halterungsabschnitt 22 in der Umfangswandung des Bohrungsabschnitts 26 abgetragen. Der Durchmesser der Befestigungsbohrung 24 ist in dem an den erweiterten Bohrungsabschnitt 26 anschließenden längeren Teilabschnitt gleich dem Kerndurchmesser d des Schraubenschafts 20.

Für die Herstellung der Befestigungsbohrung 24 wird zweckmäßig ein so genannter Stufenbohrer eingesetzt, welcher es erlaubt, die dargestellte Bohrung in einem Arbeitsschritt zu erzeugen.

Das in Fig. 3 gezeigte Ausführungsbeispiel eines nicht zur Erfindung gehörenden Befestigungselements 14' unterscheidet sich von dem vorstehend beschriebenen Befestigungselement 14 nur dadurch, dass der Schraubenschaft 20 entsprechend den Schraubenschäften von so genannten - auch als Spax-Schrauben bezeichneten - Spanplattenschrauben ausgebildet ist. Dieser sehr schlanke und im Vergleich zu Euro-Schrauben einen deutlich geringeren Kerndurchmesser d bzw. Außendurchmesser d' aufweisende Schraubenschaft kann somit - entsprechend den bekannten Spanplattenschrauben - ohne Vorbohrung in eine aus Spanplattenmaterial bestehende Möbelwand 12 eingeschraubt werden.

Dementsprechend kann der bei der Befestigungsbohrung des Befestigungselements 14 zur Aufnahme des Schraubenschafts 20 erforderliche Teilabschnitt 24 der Vorbohrung entfallen, so dass bei Verwendung des Befestigungselements 14' zur Befestigung eines Möbelbeschlags 10 lediglich eine dem Bohrungsabschnitt 26 des ersten Ausführungsbeispiels entsprechende zylindrische Ansenkung 26' zur Aufnahme des Halterungsabschnitts 22 erforderlich ist, für dessen Herstellung ein Stirnfräser entsprechenden Durchmessers D eingesetzt werden kann.

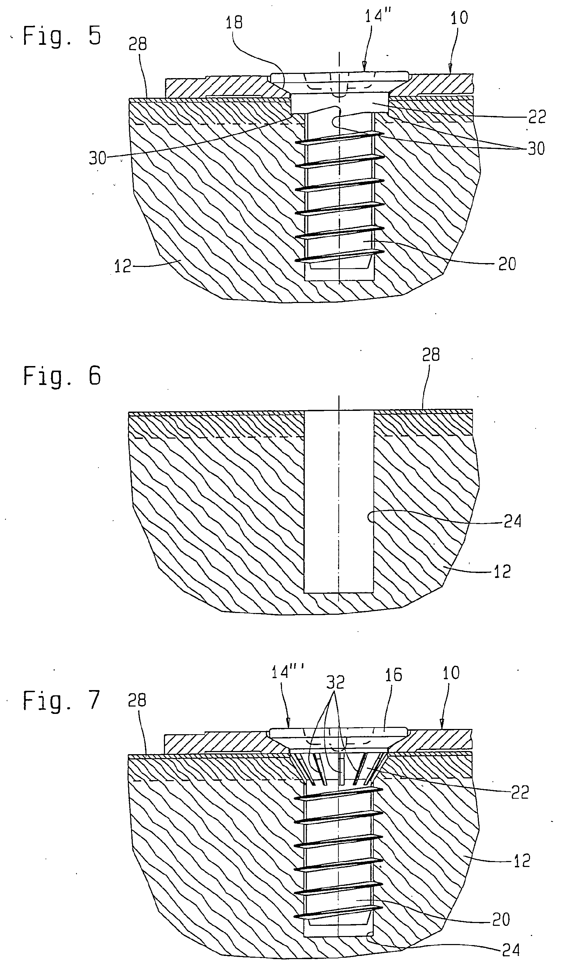

In den Figuren 5 und 7 sind gegenüber dem Befestigungselement 14 gemäß Fig. 1 abgewandelte Befestigungselemente 14" bzw. 14 "' gezeigt, welche eine Befestigung von Möbelbeschlägen 10 auf Möbelwänden 12 ermöglichen, ohne dass die zugeordnete Befestigungsbohrung 24 im Mündungsbereich einen im Durchmesser vergrößerten Befestigungsabschnitt 26 aufweisen muss. Vielmehr können die Befestigungselemente 14" und 14'" in einfachen, über ihre gesamte Länge einen gleichen Durchmesser aufweisenden Bohrungen eingesetzt werden, so dass also der Einsatz von speziellen Stufenbohrern entfällt. Darüber hinaus können als Befestigungsbohrungen dann auch in heutigen Möbelstücken oft ohnehin vorhandene einfache Bohrungen, wie sie beispielsweise zur Aufnahme von Fachbodenträgern etc. dienen, verwendet werden, so dass ein gesonderter Arbeitsschritt zur Erstellung der Befestigungsbohrung ganz entfällt.

Bei dem in Fig. 5 gezeigten Befestigungselement 14" ist der zwischen dem Schraubenkopf 16 und dem Schraubenschaft 20 vorgesehene Halterungsabschnitt 22 ebenfalls zylindrisch vergrößert, wobei die zylindrische Umfangsfläche des Halterungsabschnitts 22 einen dem Durchmesser D des Befestigungselements 14 entsprechenden Durchmesser aufweist. In den schaftseitigen Stirnflächenbereich des Halterungsabschnitts 22 sind jedoch zusätzlich eine Anzahl von in Umfangsrichtung zueinander versetzten Schneidzähnen 30 eingearbeitet, welche beim Befestigen des Möbelbeschlagteils 10 sich vor Erreichen der endgültigen Befestigungsstellung ins Material der Möbelwand einschneiden und sich somit den erweiterten Bohrungsabschnitt 26 gemäß Fig. 2 beim Befestigungsvorgang selbst schneiden.

Das Befestigungselement 14"' gemäß Fig. 7 unterscheidet sich vom Befestigungselement 14" dadurch, dass der Halterungsbereich 22 keine zylindrische, sondern eine kegelstumpfförmige äußere Begrenzungswand aufweist, in welche im dargestellten Fall wiederum eine Anzahl von in Umfangsrichtung versetzt angeordnete Schneidzähne 32 eingearbeitet sind, welche sich bei einer Drehung des Befestigungselements 14"' in Einschraubrichtung den zugehörigen komplementären kegeligen Sitz in der Befestigungsbohrung 24 gemäß Fig. 6 selbst erzeugen, indem bei der Drehung des Befestigungselements das Material im Mündungsbereich der Bohrung 24 durch Materialabtragung entsprechend der äußeren kegelstumpfförmigen Begrenzung des hier kegelstumpfförmigen Halterungsabschnitts 22 selbst erzeugt wird. Der Halterungsabschnitt 22 erfüllt in diesem Falle also auch die zusätzliche Funktion eines Ansenkbohrers.

## Patentansprüche

1. Befestigungselement (14; 14'; 14";) nach Art einer Befestigungsschraube für die Befestigung von Möbelbeschlägen (10) auf der Oberfläche von Möbelwandungen mit einem durch eine Bohrung (18) im Möbelbeschlag (10) hindurch in eine Befestigungsbohrung in der Möbelwandung einführbaren Gewindeschaft (20), an dessen äußerem freien Ende ein Schraubenkopf (16) vorgesehen ist, wobei im Übergangsbereich des Schafts (20) zum Schraubenkopf (16) ein Halterungsabschnitt (22) vorgesehen ist, dessen Durchmesser (D) kleiner als der Außendurchmesser des Schraubenkopfs (16) und zumindest abschnittsweise größer als der Durchmesser (d) des Schafts (20) ist, wobei die in Richtung der Längsmittelachse des Schafts (20) gemessene Länge des Halterungsabschnitts (22) so gewählt ist, dass dieser sich in der bestimmungsgemäßen Befestigungsstellung des Möbelbeschlags (10) auf der zugeordneten Möbelwand (12) durch deren Oberfläche hindurch ins Material der Möbelwand erstreckt, und dass der Halterungsabschnitt (22) mit wenigstens einem eine im Wesentlichen radial verlaufende Schneidkante aufweisenden, bei der Drehung der Schraube in Einschraubrichtung spanend ins Material der Möbelwandung eindringenden Schneidzahn bzw. Schneidzähnen (30) versehen ist, und wobei der Halterungsabschnitt (22) eine im Wesentlichen zylindrische Außenflache aufweist, **dadurch gekennzeichnet, dass** an der Stirnfläche des Halterungsabschnitts (22) zwei oder mehr in gleichmäßigen Winkelabständen in Umfangsrichtung versetzte Schneidzähne (30) vorgesehen sind.

2. Befestigungselement nach Anspruch 1, **dadurch gekennzeichnet, dass** der Halterungsabschnitt (22) im Bereich seiner vorderen Stirnfläche wenigstens einen radial außen bündig in die zylindrische Oberfläche übergehenden, in Einschraubrichtung vortretenden messerartigen Schneidzahn (30) aufweist.

3. Befestigungselement nach Anspruch 2, **dadurch gekennzeichnet, dass** wenigstens zwei vorzugsweise drei oder mehr in Umfangsrichtung in gleichmäßigen Winkelabständen versetzt angeordnete messerartige Schneidzähne (30) vorgesehen sind.

## Claims

1. Mounting element (14; 14'; 14") in the form of a mounting screw for the fixing of furniture fittings (10) to the surface of furniture panels with a threaded shank (20), which may be inserted through a drilled hole (18) in the furniture fitting (10) into a mounting hole in the furniture panel, and on the outer free end of which a screw head (16) is provided wherein, in the transition zone between the shank (20) and the screw head (16) there is provided a holding section (22), the diameter (D) of which is less than the outside diameter of the screw head (16) and at least in some sections greater than the diameter (d) of the shank (20), wherein the length of the holding section (22) measured in the direction of the axial centre axis of the shank (20) is chosen so that the holding section, in the intended mounting position of the furniture fitting (10) on the assigned furniture panel (12), extends through its surface into the material of the furniture panel, and that the holding section (22) is provided with at least one cutting tooth or teeth (30) having a substantially radial cutting edge and penetrating on rotation of the screw in the screwing-in direction by cutting into the material of the furniture panel, and wherein the holding section (22) has a substantially cylindrical outer surface, **characterised in that** two or more cutting teeth (30) are provided at the end face of the holding section (22), offset in the circumferential direction, at regular angular intervals.

2. Mounting element according to claim 1, **characterised in that** the holding section (22), in the area of its front end face, has at least one blade-like cutting tooth (30) which merges into the cylindrical surface, radially flush on the outside and protruding in the screwing-in direction.

3. Mounting element according to claim 2, **characterised in that** two, preferably three or more, blade-like cutting teeth (30) are provided, offset at regular angular intervals in the circumferential direction.

## Revendications

1. Elément de fixation (14 ; 14' ; 14") à la manière d'une vis de fixation pour la fixation de ferrures de meuble (10) sur la surface de parois de meuble, comprenant une tige filetée (20) pouvant être introduite à travers un alésage (18) dans la ferrure de meuble (10) de part en part dans un alésage de fixation dans la paroi de meuble, au niveau de l'extrémité libre de laquelle tige filetée est disposée une tête de vis (16), dans lequel est prévue, dans la zone de transition de la tige (20) vers la tête de vis (16), une section de support (22), dont le diamètre (D) est inférieur au diamètre extérieur de la tête de vis (16) et est au moins par endroits plus grand que le diamètre (d) de la tige (20), dans lequel la longueur, mesurée dans le sens de l'axe central longitudinal de la tige (20), de la section de support (22) est choisie de telle sorte que cette dernière s'étend, dans la position de fixation conforme à l'usage de la ferrure de meuble (10) sur la paroi de meuble (12) associée, à travers la surface de cette dernière de part en part, dans le matériau de la paroi de meuble, et que la section de support (22) est pourvue d'au moins une dent de découpe (30) présentant une arête de découpe s'étendant sensiblement de manière radiale, s'enfonçant, lors de la rotation de la vis dans le sens de vissage, avec enlèvement de copeaux dans le matériau de la paroi de meuble, et dans lequel la section de support (22) présente une face extérieure sensiblement cylindrique, **caractérisé en ce que** deux dents de découpe (30) ou plus décalées selon des espacements angulaires homogènes dans la direction périphérique sont prévues au niveau de la face frontale de la section de support (22).

2. Elément de fixation selon la revendication 1, **caractérisé en ce que** la section de support (22) présente, dans la zone de sa face frontale avant, au moins une dent de découpe (30) de type lame devenant à l'extérieur radialement, à fleur la surface cylindrique, faisant saillie sans le sens de vissage.

3. Elément de fixation selon la revendication 2, **caractérisé en ce que** sont prévues au moins deux, de préférence trois ou plus dents de découpe (30) de type lame disposées de manière décalée dans la direction périphérique à des espacements angulaires homogènes.
